# EUROPEAN PATENT SPECIFICATION

(11) **EP 1 712 756 B1**
(45) Date of publication and mention of the grant of the patent: **18.03.2009**
(21) Application number: 06112254.5
(22) Date of filing: 05.04.2006
(51) Int. Cl.: F01N 3/28, F01N 3/20

(54) **Mixing module for a fluid in a current of gas**
Mischmodul für Flüssigkeit in einem Gasstrom
Module de mélange pour un fluide dans un flux de gaz

(30) Priority: 15.04.2005 IT MI20050653
(43) Date of publication of application: 18.10.2006
(73) Proprietor: IVECO S.p.A., 10156 Torino (IT)
(72) Inventor: Dellora, Giancarlo, 10129 Torino (IT); Hagin, Harald, 8280 Kreuzlingen (CH)
(74) Representative: Borsano, Corrado

(56) References cited:
- WO-A-20/05073524
- DE-A1- 19 934 413
- US-A1- 2001 018 826
- US-A1- 2003 003 029
- US-A1- 2003 079 467

## Description

### SCOPE OF THE INVENTION

The present invention refers to a mixing module, in particular a module able to disperse a solution injected in a current of gas, more particularly a reagent solution able to develop ammonia in the current of the exhaust gases of an engine equipped with SCR system for reduction of nitric oxides.

### PRIOR ART

One of the most pressing problems in the field of internal combustion engines, in particular as regards diesel engines, is the formation of nitric oxides during combustion; these nitric oxides are discharged with the exhaust gases of the engine and represent one of the main pollutants. Although various solutions have been proposed to reduce the formation of these compounds, their level in the exhaust gases still represents a problem and, also considering application of ever-strict legal regulations, systems for reduction of nitric oxides in exhaust gases must be used. One of these solutions, known as the SCR (Selective Catalytic Reduction) system, is based on the reaction, caused by a suitable catalytic system, between the nitric oxides present in the exhaust gases and ammonia specifically introduced as reducer. The ammonia is usually introduced in the form of a preferably liquid reagent able to release ammonia in suitable temperature conditions or due to the action of specific catalysts, directly into the nitric oxide reduction system. The preferred source is usually urea in an aqueous solution, for example between 10 and 60% in weight (concentrations of around 32.5% are preferred) from which the ammonia is obtained by hydrolysis.

The urea can be introduced in various ways but is generally nebulized in the current of exhaust gases, upstream of a converter containing the SCR catalyser.

Various air type nebulization systems exist, that is to say in which the liquid is mixed with pressurized air and the mixture obtained in this way is expanded introducing this in the line of the exhaust gases, or the solution is sprayed using a specific injection device, or injector, usually passing the liquid at a certain pressure through a nozzle or valve, without using air. This latter method has attracted growing interest because mixing with pressurized air promotes precipitation of solids from the solution of urea that may cause problems to the nebulization system. Also, pressurized air systems are very expensive and much more complex than injectors that do not use air.

When using urea it must be remembered that decomposition of this compound, once the water has evaporated, may cause formation of other products in particular isocyanic acid. This is a highly reactive compound that may cause formation of other products that tend to form liquid deposits, such as liquid films, or solid deposits on the various structures of the exhaust gas system, that is to say pipes, deflectors, mixers and inside the catalytic system. This phenomenon is caused by contact of the solution with surfaces that are relatively cold in relation to the current of exhaust gases in which the solution is sprayed, as is usually the case of the walls of the gas ducts which can disperse heat towards the outside and the structures of the mixers, located inside the ducts, which are however connected, as regards heat, with the walls of the ducts.

To promote dispersion of the solution in the current of gas, which is then sent to the converter, the solution is introduced upstream of long straight sections (also 1 m) of the ducts. These sections then lead to the catalytic converter. This gives rise to considerable difficulties of construction in the case of systems to be installed on vehicles. Static mixers are also used to promote mixing but do not eliminate the need for straight-line sections between the mixer and point of injection. This occurs in any case but it is particularly true if the solution is injected without using pressurized air because the injection jet, which must not necessarily be directed against the walls of the duct, must be directed downstream, that is to say towards the mixer on which, as seen above, deposits may form especially in the case of ineffective dispersion. In fact, in airless systems, the liquid is injected at a speed such as to create a jet with a strong directional component, thoroughly concentrated for a certain length before obtaining a good level of dispersion, as it is not possible to rely on immediate expansion of the air which is typical of the other type of injection; considering the low injection pressure (maximum a few tenths of bar), and the considerable difference between the quantities of exhaust gases and those of urea that may occur, it is clear that both mixing and nebulization dimensions are very problematical. Also, if the solution is not distributed in the current of gas above a certain level, the action of the static mixer is insufficient. Also, in this way, deposits may occur on the various structures and long sections of tube promote further dispersion of heat.

WO 2005 /073524, whose content is comprised in the state of the art, with respect to the present application, under Article 54(3) EPC, discloses an apparatus for treating the exhaust gas of an internal combustion engine wherein an inner and an outer duct are provided and a liquid is sprayed into the inner duct, which is thermally insulated from the outer duct.

DE 199 34 413 discloses an apparatus wherein a mixer comprising a pipe is located coaxially inside of the pipe for exhaust gas. Injection means are provided inside of said mixer.

US 2003/0003029 discloses a boiler flue gas conduct; ammonia is sprayed directly into said conduct.

US 2001/0018826 discloses a device for SCR purification. The reactant is sprayed into a pipe coaxial to the exhaust channel, by means of an injector protruding into said pipe.

US 2003/0079467 discloses a device wherein a reactant is sprayed into a perforated pipe coaxially placed inside the channel for exhaust gases. The structure of the perforated pipe is designed to -create turbulence. The injection means protrude into the perforated pipe.

Therefore, it is desirable to obtain effective mixing of the solution in the current of exhaust gases prior to entry in the catalytic system, without using bulky structures, and without encountering the problem of deposits seen above, regardless of the injection systems used, in particular those that do not use air.

### SUMMARY

The problems identified above have been resolved according to the present invention by a mixing module for a fluid in a current of gas, according to claim 1.

The invention also refers to a method of injection of a solution of urea in a current of exhaust gases of an internal combustion engine in a module as specified above. In particular, the invention refers to the contents of the attached claims.

### LIST OF FIGURES

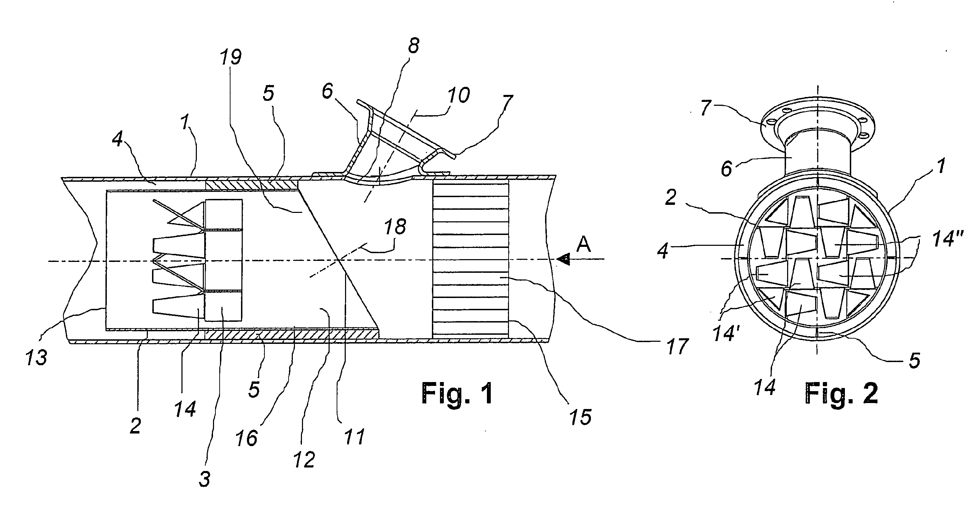

The present invention will now be illustrated through a detailed description of preferred but not exclusive embodiments, provided merely for example purposes, with the aid of figures 1 and 2 attached which show a longitudinal section and a front view respectively of a module according to the present invention.

### DETAILED DESCRIPTION OF AN EMBODIMENT

With reference to figures 1 and 2, a module for injection and dispersion of a solution of urea in a current of exhaust gases, for example in the current of exhaust gases of an engine fitted with an SCR catalytic system is described.

It includes the external duct 1, through which the current of gas flows in the direction of arrow A and internal duct 2, which preferably contains a static mixer 3. Clearance 4 is present between the two ducts. According to a preferred embodiment of the invention, the internal and external ducts are two coaxial pipes whereby clearance 4 has a circle ring type section: preferably, this clearance has a width of between 1/20 and 1/5 of the inner diameter of the internal duct in the case of a circular section duct, and its value may preferably be between 3 and 20 mm, for example approx. 5 mm. They can be fastened in position in various ways, for example slats 5 placed in a lengthwise direction (so as to guarantee minimum resistance to the current of gas). According to the aspect exemplified in the figures, four of these may be used but a lower number may also be used to advantage. In fact, it is desirable to minimise thermal exchange between the external duct and the internal duct, whereby the connection must simply guarantee sufficient mechanical strength.

The module includes preferably means for injection of a liquid; these means may include a common injection device (not shown insofar as known) or injector, able preferably to nebulize the liquid, and means 6 for fastening thereof to the module. For example, these means may be a portion of pipe 6, optionally equipped with flange 7, located at the hole 8 made in the external duct. The flange 7 may be useful for fastening a corresponding flange on the body of an injector. According to a preferred embodiment, the means of injection are able to spray a jet of liquid, preferably nebulized, said jet having an average velocity with preferably sloping direction in relation to the direction of the average velocity of the exhaust gases; the two directions may, for example form an angle of approx. 60°, preferably not exceeding 70° with the component of the velocity of the jet of liquid parallel to the velocity of the gases having the same direction thereof. According to a preferred embodiment, the velocity of the gas coincides with a lengthwise axis 9 of the external duct (and of the internal coaxial duct). The axis of the portion of tube 6 may advantageously coincide with the direction of the jet and be inclined accordingly. The direction of the jet shall preferably incide on axis 9 of the external duct. The point of injection may be positioned close to hole 8 so as to interfere as little as possible with the current of gases.

According to a preferred embodiment, the internal duct does not extend as far as hole 8 or to the injection point, but is arranged and shaped so as to intercept the jet of liquid, shielding the walls of the external duct therefrom.

The internal duct has an initial terminal edge 11 which does not lie in a plane perpendicular to the axis of the duct; in this way the internal duct extends for a greater length from part 12 opposite the means of injection, and for a lower length from part 19 at the position of the aforesaid means. For example, the terminal edge 11 may lie in a plane that forms, with axis 9 (of both the ducts, if coaxial), an angle of less than 90°, preferably less than 70°, more preferably between 55 and 60°, axis 18 normal to the aforesaid plane, lying in the plane identified between axis 9 of the duct and direction 10 of the injection jet. The second terminal edge 13 at the opposite end to the first may however lie in a plane normal to axis 9. Preferably direction 10 of the average velocity of the jet intercepts the inner wall 16 of the internal duct.

The structure may be designed in such a way that the liquid sprayed may be trapped by the current of gas and conveyed inside the internal duct and, here, to the static mixer, whereas part of the current of exhaust gases without the liquid sprayed, or with a reduced quantity thereof flows in the clearance 4. In the project, due attention will be dedicated to how the jet fans out when it leaves the injection device.

It is also possible that the means of injection introduce the liquid directly in the internal duct, for example an injector may pass through a hole made in the aforesaid duct, which may also extend as far as and upstream of hole 8. However, the solution described previously è preferable as it combines good behaviour with regard to dispersion of the liquid and also prevention of deposits with simple construction.

In this way, the current that transports the liquid (which evaporates and starts to decompose quickly if a solution of urea is used) is in contact only with the structures inside the internal duct, the thermal dispersion of which towards the outside is reduced due to the limited number of connection points with the external duct. In this way, insulation is satisfactory even if all the parts of the module are made of metal, as is preferable, considering that exhaust gases may reach high temperatures and also the need for mechanical strength. Furthermore, the gas that flows through clearance 4 contributes to a major extent to maintain the internal duct and the static mixer sufficiently hot. In this way it is possible to avoid or reduce deposits, also without having to obtain a high-level dispersion of the liquid upstream of the static mixer as was required previously and without having to introduce the liquid close to the centre of the duct of the exhaust gases, so as to reduce possibility of impact of this against the walls.

The end opposite the second edge preferably exceeds the static mixer 3 in length, preferably by at least 1/10 of the inner diameter of the duct. This makes it possible to avoid the non-longitudinal components of the velocity of the gases, imparted by the mixer, promoting impact with the walls of the external duct, once the gases exit from the internal duct. The gases which leave clearance 4 flowing along the walls, contribute to avoiding the formation of deposits by gases rich in urea or its decomposition products, and re-distribute the delivery of urea towards the centre; in fact, it often happens that gases rich in urea, with known type mixers, that impart major centrifugal movements to the current of gas, tend to distribute towards the outside, which may also result in problems of irregular functioning of the downstream catalytic converter. In high quantities, the gases that flow in the clearance in large quantities effectively contrast any centrifugal forces, due to the strong turbulence, of the gases leaving the internal duct loaded with urea or its derivatives.

The static mixer 3 may be of a different type, according to requirements. For example, that shown in the figures has a set of inclined fins in relation to the direction of the gases, and therefore to axis 9. The inclination is such as to impart a tangential component to the gases, directed generally in a direction around axis 9 (rotation) for the more external radial fins 14' and in the opposite direction for the more internal radial fins 14". Other types of mixers, known and not known may be used.

According to a preferred embodiment, the module includes a flow straightening device 15 (omitted in figure 2), upstream of the means of injection, and therefore in the external duct, from the opposite part, referring to the means of injection 6 and 8. It may be of a different type, and may for example include a set of channels 17 parallel to axis 9, of suitable length and width. The straightening device is designed to reduce or eliminate the velocity components not parallel to the direction of axis 9, that could entrain part of the liquid injected against the walls of the external duct or in clearance 4; the straightening device is particularly useful when the pipe upstream is not straight due to the presence of elbows, wider or narrower areas or for other reasons.

As seen, the module according to the present invention promotes highly efficient mixing, avoiding deposits, although it is very compact. In particular, it makes it possible to locate the injection point close to the mixer, also in the case of injection not assisted using pressurised air.

Furthermore, the presence of the clearance without static mixer with a high capacity of gas, has the effect of reducing all-round losses of air, as, in a turbulent regime, it permits passage of large quantities of gas, acting as a by-pass, while the flow of gas through the internal duct and the mixer is however sufficiency high. At low quantities of gas, in a laminar regime or in a regime similar to this condition, the relative contribution of the clearance may be reduced, so that the delivery of the mixer is always adequate. In designing the module, those skilled in the art can take into account the possibility of exploiting this type of effect.

The external duct may be the duct of the exhaust gases usually present on a vehicle.

The compact design of the module also means that it can be constructed separately and fitted on a discharge line. For example, the module shown in the figures, already equipped or not with the liquid injector, may have fastening flanges also at the two ends of the external duct, which can extend even only slightly longer than the section represented, so that it can be fastened to the discharge line, on the one hand to the exhaust gas manifold, on the other to an SCR converter, or possibly to other intermediate sections of piping. The injector can also be fastened to flange 7 and to the liquid supply line. In this way it is possible to construct a module that can be adapted to various types of vehicle.

The invention also refers to an internal combustion engine, preferably of the diesel type, equipped with an SCR catalytic system and module as described above, and a vehicle, for example an industrial vehicle, fitted with said engine.

## Claims (Claims for the following Contracting State(s): DE, FR, GB)

1. Mixing module for a fluid in a current of gas, comprising:
an external duct (1), through which a current of gas can flow;
an internal duct (2), through which a current of gas can flow, having smaller length and section than the aforesaid external duct and therein contained, so that there is a clearance (4) between the two ducts adapted to be run through by gas;
means (6, 8) for injecting a liquid;
the aforesaid internal duct having a first terminal edge (11) not lying in a plane perpendicular to axis (9) of the aforesaid internal duct, such that the internal duct extends for a greater length opposite the means for injection, and
for a lower length at the position of the aforesaid means; wherein the module further includes a flow straightening device (15), contained in the aforesaid external duct upstream of said means of injection.

2. Mixing module according to claim 1 for a solution of urea in a current of exhaust gases of an internal combustion engine.

3. Module according to any of the previous claims, **characterized by** the fact that the aforesaid internal duct contains a mixer, preferably of the static type (3).

4. Module according to any of the previous claims, **characterized by** the fact that the aforesaid internal and external ducts are two coaxial pipes and the aforesaid clearance has a circle ring section.

5. Module according to:any of the previous claims, **characterized by** the fact that the aforesaid means for injecting a liquid comprise an injector able to spray the liquid without pre-mixing it with pressurised air.

6. Module according to claim any of the previous claims, **characterized by** the fact that the aforesaid means for injecting a liquid are able to inject the liquid in a direction incident on the axis 9 of the ducts, forming an angle of less than 70° therewith.

7. Module according to any of the previous claims, **characterized by** the fact that the aforesaid means of injection are able to inject the liquid with a direction inciding on the internal wall of the aforesaid internal duct.

8. Module according to any of the previous claims, **characterized by** the fact that the aforesaid terminal edge lies in a plane forming an angle with the axis of the internal duct of less than 75°.

9. Module according to any of the previous claims, **characterized by** the fact that the aforesaid internal duct does not extend as far as to the point of injection.

10. Module according to claim 3, **characterised by** the fact that the aforesaid internal duct also extends from the end, opposite with respect to the means of injection, beyond the mixer.

11. Method of injection of a solution of urea in a current of exhaust gases of an internal combustion engine, **characterized by** the fact that the aforesaid exhaust gases flow through a module according to any of the previous claims and the current is divided between the internal duct and the clearance.

12. Method according to claim 11, **characterized by** the fact that the aforesaid means of injection are upstream of the internal duct and inject the liquid so that it does not substantially flow in the clearance.

13. Internal combustion engine, preferably diesel, equipped with an SCR catalytic system and module according to any of claims from 1 to 10.

14. Vehicle equipped with engine according to claim 13.

## Claims (Claims for the following Contracting State(s): AT, BE, BG, CH/LI, CY, CZ, DK, EE, ES, FI, GR, HU, IE, IS, IT, LT, LU, LV, MC, NL, PL, PT, RO, SE, SI, SK, TR)

1. Mixing module for a fluid in a current of gas, comprising:
an external duct (1), through which a current of gas can flow;
an internal duct (2), through which a current of gas can flow, having smaller length and section than the aforesaid external duct and therein, contained, so that there is a clearance (4) between the two ducts adapted to be run through by gas; means (6, 8) for injecting a liquid;
**characterized by** the fact that the aforesaid internal duct has a first terminal edge (11) not lying in a plane perpendicular to axis (9) of the aforesaid internal duct, such that the internal duct extends for a greater length opposite the means for injection, and for a lower length at the position of the aforesaid means.

2. Mixing module according to claim 1, for a solution of urea in a current of exhaust gases of an internal combustion engine.

3. Module according to any of the previous claims, **characterized by** the fact that the aforesaid internal duct contains a mixer, preferably of the static type (3).

4. Module according to any of the previous claims, **characterized by** the fact that the aforesaid internal and external ducts are two coaxial pipes and the aforesaid clearance has a circle ring section.

5. Module according to any of the previous claims, **characterized by** the fact that the aforesaid means for injecting a liquid comprise an injector able to spray the liquid without pre-mixing it with pressurised air.

6. Module according to claim any of the previous claims, **characterized by** the fact that the aforesaid means for injecting a liquid are able to inject the liquid in a direction incident on the axis 9 of the ducts, forming an angle of less than 70° therewith.

7. Module according to any of the previous claims, **characterized by** the fact that the aforesaid means of injection are able to inject the liquid with a direction inciding on the internal wall of the aforesaid internal duct.

8. Module according to any of the previous claims, **characterized by** the fact that the aforesaid terminal edge lies in a plane forming an angle with the axis of the internal duct of less than 75°.

9. Module according to any of the previous claims, **characterized by** the fact that the aforesaid internal duct does not extend as far as to the point of injection.

10. Module according to claim 3, **characterised by** the fact that the aforesaid internal duct also extends from the end, opposite with respect to the means of injection, beyond the mixer.

11. Module according to any of the previous claims, **characterized by** the fact that it includes a flow straightening device (15), contained in the aforesaid external duct upstream of said means of injection.

12. Method of injection of a solution of urea in a current of exhaust gases of an internal combustion engine, **characterized by** the fact that the aforesaid exhaust gases flow through a module according to any of the previous claims and the current is divided between the internal duct and the clearance.

13. Method according to claim 12, **characterized by** the fact that the aforesaid means of injection are upstream of the internal duct and inject the liquid so that it does not substantially flow in the clearance.

14. Internal combustion engine, preferably diesel, equipped with an SCR catalytic system and module according to any of claims from 1 to 11.

15. Vehicle equipped with engine according to claim 14.

## Patentansprüche (Patentansprüche für folgende(n) Vertragsstaat(en): DE, FR, GB)

1. Mischmodul für ein Fluid in einem Gasstrom, umfassend:
einen äußeren Kanal (1), durch den ein Gasstrom fließen kann;
einen inneren Kanal (2), durch den ein Gasstrom fließen kann, mit einer kleineren Länge und Profil als der äußere Kanal und darin aufgenommen, so dass es eine Aussparung (4) zwischen den zwei Kanälen gibt, die von Gas durchflossen werden kann;
ein Mittel (6, 8) zum Einspritzen einer Flüssigkeit;
wobei der innere Kanal eine nicht in einer zur Achse (9) des inneren Kanals senkrechten Ebene liegende erste Endkante (11) aufweist, so dass sich der innere Kanal gegenüber dem Einspritzmittel über eine größere Länge erstreckt, und an der Position des Mittels über eine kleinere Länge, wobei das Modul weiter eine in dem äußeren Kanal stromaufwärts des Einspritzmittels aufgenommene Flussbegradigungseinrichtung (15) umfasst.

2. Mischmodul gemäß Anspruch 1 für eine Harnstofflösung in einem Abgasstrom eines Verbrennungsmotors.

3. Modul gemäß einem der vorangegangenen Ansprüche, **gekennzeichnet durch** die Tatsache, dass der innere Kanal einen Mischer aufnimmt, bevorzugt der stationären Art (3).

4. Modul gemäß einem der vorangegangenen Ansprüche, **gekennzeichnet durch** die Tatsache, dass der innere und äußere Kanal zwei koaxiale Röhren sind, und die Aussparung eine Kreisringsektion aufweist.

5. Modul gemäß einem der vorangegangenen Ansprüche, **gekennzeichnet durch** die Tatsache, dass das Mittel zum Einspritzen einer Flüssigkeit einen Einspritzer umfasst, der die Flüssigkeit ohne sie vorzumischen mit bedruckter Luft sprühen kann.

6. Modul gemäß einem der vorangegangenen Ansprüche, **gekennzeichnet durch** die Tatsache, dass das Mittel zum Einspritzen einer Flüssigkeit die Flüssigkeit in einer auf die Achse (9) der Kanäle treffenden, einen Winkel von weniger als 70° hiermit ausbildenden Richtung einspritzen kann.

7. Modul gemäß einem der vorangegangenen Ansprüche, **gekennzeichnet durch** die Tatsache, dass das Einspritzmittel die Flüssigkeit mit einer auf die innere Wand des inneren Kanals treffenden Richtung einspritzen kann.

8. Modul gemäß einem der vorangegangenen Ansprüche, **gekennzeichnet durch** die Tatsache, dass die Endkante in einer einen Winkel mit der Achse des inneren Kanals von weniger als 75° ausbildenden Ebene liegt.

9. Modul gemäß einem der vorangegangenen Ansprüche, **gekennzeichnet durch** die Tatsache, dass sich der innere Kanal nicht so weit wie bis zum Einspritzpunkt erstreckt.

10. Modul gemäß Anspruch 3, **gekennzeichnet durch** die Tatsache, dass sich der innere Kanal ebenfalls von dem hinsichtlich des Einspritzmittels gegenüberliegenden Ende über dem Mischer hinaus erstreckt.

11. Einspritzverfahren einer Harnlösung in einen Abgasstrom eines Verbrennungsmotors, **gekennzeichnet durch** die Tatsache, dass die Abgase **durch** ein Modul gemäß einem der zuvor genannten Ansprüche fließen, und der Strom zwischen dem inneren Kanal und der Aussparung geteilt wird.

12. Verfahren gemäß Anspruch 11, **gekennzeichnet durch** die Tatsache, dass das Einspritzmittel stromaufwärts des inneren Kanals gelegen ist, und eine Flüssigkeit derart einspritzt, dass sie im Wesentlichen nicht in die Aussparung fließt.

13. Verbrennungsmotor, bevorzugt Diesel, ausgerüstet mit einem SCR Katalysatorsystem und einem Modul gemäß einem der Ansprüche 1 bis 10.

14. Fahrzeug, das mit einem Motor gemäß Anspruch 13 ausgerüstet ist.

## Patentansprüche (Patentansprüche für folgende(n) Vertragsstaat(en): AT, BE, BG, CH, LI, CY, CZ, DK, EE, ES, FI, GR, HU, IE, IS, IT, LT, LU, LV, MC, NL, PL, PT, RO, SE, SI, SK, TR)

1. Mischmodul für ein Fluid in einem Gasstrom, umfassend:
einen äußeren Kanal (1), durch den ein Gasstrom fließen kann;
einen inneren Kanal (2), durch den ein Gasstrom fließen kann, mit einer kleineren Länge und Profil als der äußere Kanal und darin aufgenommen, so dass es eine Aussparung (4) zwischen den zwei Kanälen gibt, die von Gas durchflossen werden kann;
ein Mittel (6, 8) zum Einspritzen einer Flüssigkeit;
**gekennzeichnet durch** die Tatsache, dass der innere Kanal eine nicht in einer zur Achse (9) des inneren Kanals senkrechten Ebene liegende erste Endkante (11) aufweist, so dass sich der innere Kanal gegenüber dem Einspritzmittel über eine größere Länge erstreckt, und an der Position des Mittels über eine kleinere Länge.

2. Mischmodul gemäß Anspruch 1 für eine Harnstofflösung in einem Abgasstrom eines Verbrennungsmotors.

3. Modul gemäß einem der vorangegangenen Ansprüche, **gekennzeichnet durch** die Tatsache, dass der innere Kanal einen Mischer aufnimmt, bevorzugt der stationären Art (3).

4. Modul gemäß einem der vorangegangenen Ansprüche, **gekennzeichnet durch** die Tatsache, dass der innere und äußere Kanal zwei koaxiale Röhren sind, und die Aussparung eine Kreisringsektion aufweist.

5. Modul gemäß einem der vorangegangenen Ansprüche, **gekennzeichnet durch** die Tatsache, dass das Mittel zum Einspritzen einer Flüssigkeit einen Einspritzer umfasst, der die Flüssigkeit ohne sie vorzumischen mit bedruckter Luft sprühen kann.

6. Modul gemäß einem der vorangegangenen Ansprüche, **gekennzeichnet durch** die Tatsache, dass das Mittel zum Einspritzen einer Flüssigkeit die Flüssigkeit in einer auf die Achse (9) der Kanäle treffenden, einen Winkel von weniger als 70° hiermit ausbildenden Richtung einspritzen kann.

7. Modul gemäß einem der vorangegangenen Ansprüche, **gekennzeichnet durch** die Tatsache, dass das Einspritzmittel die Flüssigkeit mit einer auf die innere Wand des inneren Kanals treffenden Richtung einspritzen kann.

8. Modul gemäß einem der vorangegangenen Ansprüche, **gekennzeichnet durch** die Tatsache, dass die Endkante in einer einen Winkel mit der Achse des inneren Kanals von weniger als 75° ausbildenden Ebene liegt.

9. Modul gemäß einem der vorangegangenen Ansprüche, **gekennzeichnet durch** die Tatsache, dass sich der innere Kanal nicht so weit wie bis zum Einspritzpunkt erstreckt.

10. Modul gemäß Anspruch 3, **gekennzeichnet durch** die Tatsache, dass sich der innere Kanal ebenfalls von dem hinsichtlich des Einspritzmittels gegenüberliegenden Ende über dem Mischer hinaus erstreckt.

11. Modul gemäß einem der vorangegangenen Ansprüche, **gekennzeichnet durch** die Tatsache, dass es eine in dem äußeren Kanal stromaufwärts des Einspritzmittels aufgenommene Flussbegradigungseinrichtung (15) umfasst.

12. Einspritzverfahren einer Harnlösung in einen Abgasstrom eines Verbrennungsmotors, **gekennzeichnet durch** die Tatsache, dass die Abgase **durch** ein Modul gemäß einem der zuvor genannten Ansprüche fließen, und der Strom zwischen dem inneren Kanal und der Aussparung geteilt wird.

13. Verfahren gemäß Anspruch 12, **gekennzeichnet durch** die Tatsache, dass das Einspritzmittel stromaufwärts des inneren Kanals gelegen ist, und eine Flüssigkeit derart einspritzt, dass sie im Wesentlichen nicht in die Aussparung fließt.

14. Verbrennungsmotor, bevorzugt Diesel, ausgerüstet mit einem SCR Katalysatorsystem und einem Modul gemäß einem der Ansprüche 1 bis 11.

15. Fahrzeug, das mit einem Motor gemäß Anspruch 14 ausgerüstet ist.

## Revendications (Revendications pour l'(les) Etat(s) contractant(s) suivant(s): DE, FR, GB)

1. Module de mélange pour un fluide dans un flux de gaz, comprenant:
un conduit externe (1), à travers lequel un flux de gaz peut s'écouler;
un conduit interne (2) à travers lequel un flux de gaz peut s'écouler, ayant une plus petite longueur et section que le conduit externe précité et se trouvant dans celui-ci de sorte qu'il y a un jeu (4) entre les deux conduits apte au passage du gaz;
des moyens (6, 8) pour injecter un liquide;
le conduit interne précité ayant un premier bord terminal (11) ne se situant pas dans un plan perpendiculaire à l'axe (9) du conduit interne précité de sorte que le conduit interne s'étend sur une plus grande longueur opposée aux moyens d'injection, et sur une plus petite longueur à la position desdits moyens précités; où le module comprend en outre un dispositif de redressement d'écoulement (15), se trouvant dans le conduit externe précité en amont desdits moyens d'injection.

2. Module de mélange selon la revendication 1, pour une solution d'urée dans un flux de gaz d'échappement d'un moteur à combustion interne.

3. Module selon l'une quelconque des revendications précédentes, **caractérisé par le fait que** le conduit interne précité contient un mélangeur, de préférence du type statique (3).

4. Module selon l'une quelconque des revendications précédentes, **caractérisé par le fait que** les conduits interne et externe précités sont deux tubes coaxiaux et le jeu précité présente une section en anneau de cercle.

5. Module selon l'une quelconque des revendications précédentes, **caractérisé par le fait que** les moyens précités pour l'injection d'un liquide comprennent un injecteur apte à pulvériser le liquide sans le prémélanger avec de l'air comprimé.

6. Module selon l'une quelconque des revendications précédentes, **caractérisé par le fait que** les moyens précités pour l'injection d'un liquide sont aptes à injecter le liquide dans une direction incidente sur l'axe (9) des conduits, formant un angle inférieur à 70° avec ceux-ci.

7. Module selon l'une quelconque des revendications précédentes, **caractérisé par le fait que** les moyens précités d'injection sont aptes à injecter le liquide dans une direction incidente sur la paroi interne du conduit interne précité.

8. Module selon l'une quelconque des revendications précédentes, **caractérisé par le fait que** le bord terminal précité se situe dans un plan formant un angle avec l'axe du conduit interne inférieur à 75°.

9. Module selon l'une quelconque des revendications précédentes, **caractérisé par le fait que** le conduit interne précité ne s'étend pas jusqu'au point d'injection.

10. Module selon la revendication 3, **caractérisé par le fait que** le conduit interne précité s'étend également depuis l'extrémité, opposée par rapport aux moyens d'injection, au-delà du mélangeur.

11. Procédé d'injection d'une solution d'urée dans un flux de gaz d'échappement d'un moteur à combustion interne, **caractérisé par le fait que** les gaz d'échappement précités s'écoulent à travers un module selon l'une quelconque des revendications précédentes, et le courant est divisé entre le conduit interne et le jeu.

12. Procédé selon la revendication 11, **caractérisé par le fait que** les moyens d'injection précités se situent en amont du conduit interne et injectent le liquide de sorte qu'il ne s'écoule pas sensiblement dans le jeu.

13. Moteur à combustion interne, de préférence Diesel, équipé d'un système catalytique SCR et d'un module selon l'une quelconque des revendications 1 à 10.

14. Véhicule équipé d'un moteur selon la revendication 13.

## Revendications (Revendications pour l'(les) Etat(s) contractant(s) suivant(s): AT, BE, BG, CH, LI, CY, CZ, DK, EE, ES, FI, GR, HU, IE, IS, IT, LT, LU, LV, MC, NL, PL, PT, RO, SE, SI, SK, TR)

1. Module de mélange pour un fluide dans un flux de gaz, comprenant:
un conduit externe (1) à travers lequel un flux de gaz peut s'écouler;
un conduit interne (2) à travers lequel un flux de gaz peut s'écouler, ayant une plus petite longueur et section que le conduit externe précité et contenu dans celui-ci de sorte qu'il est formé un jeu (4) entre les deux conduits apte au passage des gaz;
des moyens (6, 8) pour injecter un liquide;
**caractérisé par le fait que** le conduit interne précité possède un premier bord terminal (11) ne se situant pas dans un plan perpendiculaire à l'axe (9) du conduit interne précité de sorte que le conduit interne s'étend sur une plus grande longueur opposée aux moyens d'injection, et sur une plus petite longueur à la position desdits moyens précités.

2. Module de mélange selon la revendication 1, pour une solution d'urée dans un flux de gaz d'échappement d'un moteur à combustion interne.

3. Module selon l'une quelconque des revendications précédentes, **caractérisé par le fait que** le conduit interne précité contient un mélangeur, de préférence du type statique (3).

4. Module selon l'une quelconque des revendications précédentes, **caractérisé par le fait que** les conduits interne et externe précités sont deux tubes coaxiaux et que le jeu précité possède une section en anneau de cercle.

5. Module selon l'une quelconque des revendications précédentes, **caractérisé par le fait que** les moyens précités pour l'injection d'un liquide comprennent un injecteur apte à pulvériser le liquide sans le prémélanger avec de l'air comprimé.

6. Module selon l'une quelconque des revendications précédentes, **caractérisé par le fait que** les moyens précités pour l'injection d'un liquide sont aptes à injecter le liquide dans une direction incidente sur l'axe (9) des conduits, en formant un angle inférieur à 70° avec ceux-ci.

7. Module selon l'une quelconque des revendications précédentes, **caractérisé par le fait que** les moyens d'injection précités sont aptes à injecter le liquide dans une direction incidente sur la paroi interne du conduit interne précité.

8. Module selon l'une quelconque des revendications précédentes, **caractérisé par le fait que** le bord terminal précité se situe dans un plan formant un angle avec l'axe du conduit interne inférieur à 75°.

9. Module selon l'une quelconque des revendications précédentes, **caractérisé par le fait que** le conduit interne précité ne s'étend pas jusqu'au point d'injection.

10. Module selon la revendication 3, **caractérisé par le fait que** le conduit interne précité s'étend également depuis l'extrémité, opposée par rapport aux moyens d'injection, au-delà du mélangeur.

11. Module selon l'une quelconque des revendications précédentes, **caractérisé par le fait qu'**il comprend un dispositif de redressement d'écoulement (15) se trouvant dans le conduit externe précité en amont desdits moyens d'injection.

12. Procédé d'injection d'une solution d'urée dans un flux de gaz d'échappement d'un moteur à combustion interne, **caractérisé par le fait que** les gaz d'échappement précités s'écoulent à travers un module selon l'une quelconque des revendications précédentes, et le courant est divisé entre le conduit interne et le jeu.

13. Procédé selon la revendication 12, **caractérisé par le fait que** les moyens d'injection précités se situent en amont du conduit interne et injectent le liquide de sorte qu'il ne s'écoule pas sensiblement dans le jeu.

14. Moteur à combustion interne, de préférence Diesel, équipé d'un système catalytique SCR et d'un module selon l'une quelconque des revendications 1 à 11.

15. Véhicule équipé d'un moteur selon la revendication 14.
